# EUROPEAN PATENT APPLICATION

(11) **EP 2 351 665 A1**
(43) Date of publication of application: **03.08.2011**
(21) Application number: 09823103.8
(22) Date of filing: 13.03.2009
(51) Int. Cl.: B60Q 3/02

(54) **DEVICE AND METHOD FOR DIFFUSED LIGHTING FOR VEHICLE INTERIORS**

(30) Priority: 28.10.2008 ES 200803051
(71) Applicant: Universidad Complutense de Madrid, 28040 Madrid (ES)
(72) Inventor: SÁNCHEZ RAMOS, Celia, 028037 Madrid (ES)
(74) Representative: Temino Ceniceros, Ignacio
(86) International application number: PCT/ES2009/000146
(87) International publication number: WO 2010/049548

(57) **Abstract**

This invention relates to a device for diffused lighting for vehicle interiors that includes one or more light sources and that is located outside the field of vision of the driver of the vehicle. Drivers, especially following refractive surgery, manifest debilitating effects and symptoms of dazzling. The mioisis caused by the diffused light of this invention improves the driver's visual performance, in terms of quality of vision.

## Description

### INVENTION SECTOR

The invention is included in the designing and construction of vehicles sector in relation with driving safety and comfort. The invention refers to the interior illumination of vehicles and more specifically to setting the optimum interior lighting conditions for vehicles in order to increase safety while driving, especially for drivers who have undergone refractive eye surgery.

### STATE OF THE ART

Vision at night or under low lighting conditions is a very important subject in current society since many commutes due to work or pleasure occur under these circumstances. A large number of people experience serious difficulties when driving at night or when carrying out tasks under low lighting conditions (mesopic conditions), even when under photopic lighting conditions (daylight) they do not experience any vision problems. One of the most common causes of these difficulties is night myopia. Night myopia is primarily characterized by difficulty focussing an image while under low lighting conditions. This deficiency is caused by a change in the refractive properties of the eye when the pupil dilates (mydriasis) because the peripheral area of the ocular optic system does not focus the image very well. Under low lighting conditions and a natural dilation of the pupils occurs, the amount of light that is focused by the peripheral area of the ocular optic system in front of the retina increases, causing myopia. The peripheral area of any optic system, including the ocular (cornea and crystalline), causes spherical and chromatic aberrations of the image, which under low lighting and dilated pupil conditions causes undesirable visual effects such as halos, glares, spots, deformations and other optical aberrations as well as a decrease in sensitivity to contrast. These visual deficiencies increase in number and type in persons that have undergone refractive eye surgery; in general, this is due to the side effects derived from the surgery.

During sensitive tasks, which for safety reasons require an adequate view of the surroundings such as driving any vehicle at night, it would be desirable to optimize the adaptation of the human visual system to the maximum extent, minimizing the influence of the peripheral ocular area and other possible deformations of the surface of the eye when it perceives the image.

In the case of driving under mesopic low visibility conditions such as driving at night among others, the possilbility of using a light source inside the vehicle has been proposed in order to improve the visual capacity of the driver and occupants. For example, Canadian patent request CA2541218 refers to the use of a light beam directed at the eyes of the occupants and more specifically at the driver to cause his pupils to constrict (miosis) that will decrease the possible negative effects caused by pupil dilation on visual capacity under low lighting conditions. The light source is preferably located inside the vehicle and in front of the driver, in a manner that the light beam with an intensity that can be adjusted is directed at the driver's eyes with a practically perpendicular angle. This solution is not viable because the driver suffers a loss of sensitivity to contrast due to the incapacitating dazzle.

American patent US6056424 refers to an elongated light source located next to the vehicle's windshield wipers that shines a light directly into the driver's eyes for the purpose of provoking miosis in order to reduce dazzling and increase the clarity of the images. The intensity of this light can be adjusted and may be comprised of different colours in order to increase the desired effect.

The purpose of patents CA2541218 and US6056424 is to improve the visual capacity of the driver of a vehicle under mesopic conditions of low visibility. However, neither of these patents takes into account the own effects suffered by the driver due to the dazzling light source, which may decrease the driver's sensitivity to contrast and visual acuity in as much as 20%; thus, negatively affecting his visual capacity while driving under mesopic low visibility conditions.

US patent US5283720, which was granted to Prince Corporation, refers to a light source that is purposely shined away from the driver's eyes to provide a courtesy and reading light without distracting the driver. US3630567 refers to a device used to reduce dazzling of a vehicle's driver and includes a light source directed towards the windshield, either directly or using light beam diffusing surfaces.

US4905125 refers to a device used for reducing fatigue in the driver of a motor vehicle that produces an indirect, soft, purple light, which causes the pupils of the eyes of the driver to constrict so that dazzling effects caused by approaching headlights is greatly reduced during night time driving conditions. US6568738 refers to a an optical dazzle limiter that includes a light source with its intensity adjusted depending on the exterior incident light and is directed at a reflecting surface in order to illuminate the vehicle occupant's field of vision. These patents are interesting but only refer to the dazzling effect that is eventually produced by the lights of a vehicle that is circulating in the opposite direction while driving at night.

Any expert in the matter will note that the devices described in the aforementioned patents cannot efficiently resolve the problem of decreased visibility that is produced by halos, glares, deformed images, fading, glare, images out of focus, etc., suffered by persons who are in mesopic conditions of low visibility and night driving, and have undergone refractive eye surgery, especially by LASIK and/or with progressive intraocular lens implants. These patents refer only to the headlights of a vehicle travelling in the opposite direction at night.

This invention efficiently solves the technical problem of improving the visual performance of vehicle drivers under low intensity ambient light conditions using an illumination device for the interior of vehicles, which is described below.

### DESCRIPTION OF THE INVENTION

This invention refers to a device for illuminating the interior of vehicles (1) that includes at least on light source (2) and the means for installing and providing power for each light source; is located outside the field of vision (3) of the driver (4) of the vehicle and generates a diffused light (5) of variable spectrum composition. Under mesopic (low light) visibility conditions, said device improves the visual performance of the driver (4) by means of a regulated miosis effect (pupil constriction).

Within the context of this invention, the interior of a vehicle (1) is defined as the space where the driver (4) and occupants of the vehicle are located. The vehicles referred to in this invention may include any type of automobile such as cars, vans, trucks, tractors, industrial vehicles such as excavators, compactors, aerial vehicles such as large and small aircraft, helicopters, military vehicles such as combat vehicles, tanks, etc., and any other vehicle that has an area for a driver, which can be illuminated.

Within the context of this invention, diffused light (5) is defined as any light that originates from one or several light sources (2) in a manner so the light shines on illuminated objects from multiple angles, achieving an illumination that is uniform and homogenous; in other words, light that propagates in all directions. The light sources (2) may be generated using any type of lamp, including incandescent, fluorescent, etc., and preferably using LED type lamps, to which elements can be added to considerably increase the amplitude of the illumination surface such as for example fibre optics. In a particular embodiment of this invention, a diffused light effect (5) may be achieved that allows for a homogenous and uniform illumination of objects using auxiliary diffusers or surfaces that reflect the light emitted by a light source.

The light source (2) is connected to the electrical power supply, which may be the vehicle's own electrical power battery or any other electrical power generating device such as an independent electrical power generator like for example, a battery.

It is important that the diffused light source (2) that characterizes this invention be installed inside the vehicle (1) and outside the field of vision (3) of the vehicle's driver (4), in a manner so the light emitted in no case shines directly on the eyes of the driver (4). This way, a double effect is achieved: first, pupil constriction stimulation is generated by prevalence of the parasympathetic nervous system that is induced by the existence of light; and second, since the light is diffused, a visual stimulus is generated that does not affect the retinal neurons of the visual system. The miosis caused by this light is precise and completely regulated so the light shines on the parafoveal area, which is the area with the maximum number of photoreceptors for this level of illumination. In the context of this specification, this miosis is called regulated miosis.

In a preferred embodiment of this invention, at least one of the light sources (2) is located above the driver (4) of the vehicle. In a particular embodiment of this invention, the light source (2) can be moved above the driver's (4) head, preferably using a railing system (6), positioning it in the most appropriate position to trigger the desired miosis without dazzling the driver (4), and in such a manner so that said driver (4) does not look directly into the light source (2) when he looks upward. In another particular embodiment of this invention, the light source (2) may include several independent lamps that may be turned on or off independently.

In a particular embodiment of this invention, the light source may incorporate a coupled light diffuser (7). The diffuser (7) is an element that transforms the rays originating from a lamp into light that propagates in all directions. Preferably, the device described in this invention incorporates a diffused light intensity regulator (8), which can be adjusted to achieve, at all times, the appropriate miosis that provides the best visual performance for the vehicle driver (4). This device is especially useful for the purpose of reducing the formation of halos, glares, spots, deformations, faded images and images that are out of focus and visual discomfort that is generated under mesopic low light conditions and an external visual stimulus is present.

Preferably, the diffused light (5) obtained using the illumination device is daylight (white) with a wavelength between 380 and 760 nm. In a preferred embodiment of this invention, the diffused light (5) that is obtained using the illumination device may be regulated in a specific manner using regulators or filters (9) so that the proportion of short wavelength bands (blue or violet), between 380 and 500 nm, that make up the white light are increased with respect to the rest of the bands. This way, it is possible to stimulate photopigments (melanopsin) of some neurons of the retinal ganglion that are stimulated by the lights in this band of the spectrum. Specifically, the blue wavelength interval (between 431 and 500 nm) or the violet (between 380 and 430 nm) can be increased. In a particular embodiment of this invention, the regulation of the spectral composition is achieved using a regulator.

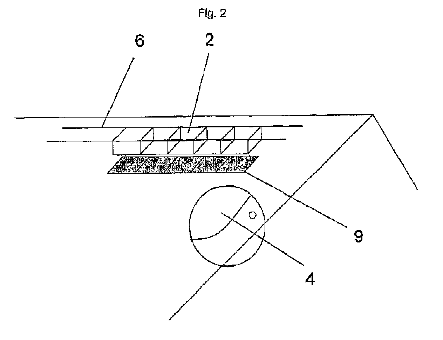

The diffused light (5) provided by the device described in this invention causes a pupil miosis in the driver (4) of the vehicle, which allows increasing the driver's visual performance when faced with an external stimulus by decreasing the disabling effect produced by the portion of visual stimulus light rays (A) that go through the peripheral area of the visual optic system (10). The disabling effects caused by aberrations manifest as images that are out of focus (a and a') in front of the retina (11). Figure 2 shows how the light rays (B) that go through the central surface of the visual optic system (10) are properly focussed (b) in the retina (11). The miosis caused by regulated diffused light (5) simultaneously reduces other disabling effects such as the formation of halos, glares, spots, deformations and images out of focus that are generated under mesopic low light conditions.

The device described in this invention is especially directed at drivers that have undergone any type of eye surgery, who are usually left with small side effects and deformations on the ocular surface that considerably increase the aforementioned disabling effects and visual deficiencies that are encountered in low light environments. Representative of this are persons who have undergone refractive eye surgery for myopia, hyperopia and astigmatism (for example by LASIK), persons with progressive intraocular lens implants after cataract extraction, etc.

Another aspect of this invention refers to the method for improving the visual performance of the driver (4) of a vehicle while under mesopic low visibility conditions that consists in provoking a regulated miosis in the driver (4) of the vehicle using a diffused light (5) that is emitted inside the vehicle (1). In a preferred embodiment of this method, the diffused light (5) is generated by at least one light source (2) that is preferably located inside the vehicle, (1) above the driver (4) and outside the vehicle driver's (4) field of vision (3).

Preferably, this method includes the lighting of the interior of the vehicle (1) using at least one lamp emitting a diffused light (5) that is white in colour (day-light), with an adjustable intensity and a variable spectral composition. In a preferred embodiment of this method, the light source (2) incorporates filters or regulators designed for obtaining different proportions of daylight spectral bands and preferably, the blue and violet light bands (between 380 and 500 nm) predominate.

The device and illumination method described in this invention provide the added advantage that they can provide the function of indicating the position of the vehicle while it is in a low light condition without dazzling other drivers that eventually appear in the area.

### DESCRIPTION OF THE DRAWINGS

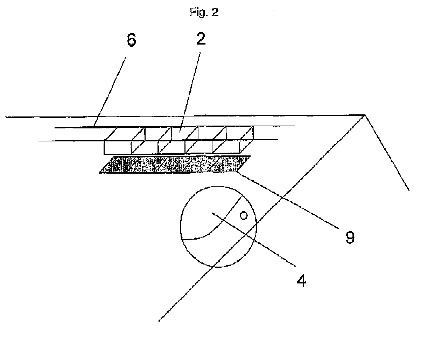

In order to facilitate the comprehension of the characteristics of the invention and as part of the descriptive report, three drawings are included to help explain the invention:

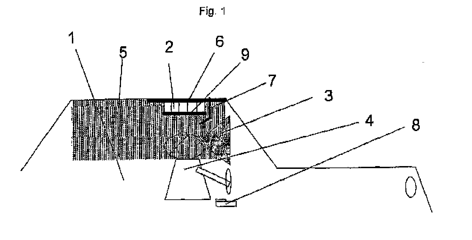

Figure 1. Illumination device.
   (1) Interior of the vehicle
   (2) Light source
   (3) The vehicle driver's field of vision
   (4) Vehicle driver
   (5) Diffused light
   (6) Supporting rails and moving the light source
   (7) Light diffuser
   (8) Diffused light intensity regulator control
   (9) Filter for regulating the light source
Figure 2. Illumination device.
   (2) Light source that incorporates 5 independent modules
   (4) Vehicle driver
   (6) Supporting rails and moving the light source
   (8) Filters adapted for regulating each light source module
Figure 3. Drawing of the peripheral aberration in an ocular optic system where the peripheral rays (A) go through the ocular optic system (10) and converge at back focal points (a and a') to the retina (11). The rays that go through the ocular optic system (10) through the centre area (B) suffer the proper refraction to a focal point (b) that provides a clear image in the retina (11). In the figure, the ocular optic system is crossed through a dotted line (12) that represents the optic centre of said system.

### EMBODIMENT METHOD FOR THE INVENTION

As an example and without excluding any other embodiment method, some particular embodiments of the invention are described.

### Example 1

As a diffused light emitting source, an LED lamp was used of the type that can be found commercially on the market (Galaxy Link Industries Ltd), whose dimensions were 12 centimetres wide and 24 centimetres long. The lamp was installed on the base structure of the ceiling of the vehicle, taking into account the size (width and length) of the lamp and the dimensions of the driver's seat. Five modules arranged consecutively were used, without any separation between them and which could be turned on independently.

The lamps installed in this fashion provoked a pupil miosis without dazzling the driver (4) of the vehicle. To accomplish this, 14 Watts of power and 1.2 Amps of current were set and the following lighting conditions on the lamps: luminance 2810 lux and colour temperature 7000 °K. The colour temperature of the source (spectral composition) could be regulated using a regulator (8) designed for such purpose, of the type that can be found on the market (Grasslin brand).

### Example 2

It was carried out in the same manner as described in example 1 except that the lamp was installed on the ceiling of the vehicle with a movement system fastened to the roof, which included a system of rails (6) and hooks similar to those used for moving the front seats of an automobile and adjusting the position of the occupants of said seats.

### Example 3

It was carried out in the same manner as in example 1 except that a light filter (9) of the type that can be found commercially on the market (Rosco brand) was added, and with which the spectral composition of the light could be regulated between the 380 to 500 nm wavelengths.

The power, current, luminance and spectral composition could be varied, increasing the colour temperature with greater proportions of short wavelengths. The variation of the spectral composition of the diffused light (5) was always carried out within the safety range that protects the structure and function of the human retina from the phototoxic light effects in order to not produce neural lesions, which will vary according to the time and composition of the stimulus.

## Claims

1. Device used for illuminating the interior of vehicles (1) in order to improve the visual performance of the driver (4) by means of regulated miosis, which includes at least one light source (2) that generates a diffused light (5) located outside the driver's (4) field of vision (3) and the means for installing and supplying electrical power to each light source.

2. Device used for illuminating the interior of vehicles (1) in accordance with claim 1 that is **characterized** because at least one light source (2) is completely located inside the vehicle (1).

3. Device used for illuminating the interior of vehicles (1) in accordance with claim 2 that is **characterized** because at least one light source (2) is located above the driver (4) of the vehicle.

4. Device used for illuminating the interior of vehicles (1) in accordance with claim 2 or 3 that is **characterized** because at least one light source (2) can be moved above the driver (4).

5. Device used for illuminating the interior of vehicles (1) in accordance with any of the aforementioned claims that is **characterized** because the movement is carried out using a rail system (6) fastened to the ceiling of the vehicle.

6. Device used for illuminating the interior of vehicles (1) in accordance with any of the aforementioned claims tat is **characterized** because each light source (2) is selected between incandescent lamps, fluorescent lamps and LEDs used in fibre optics.

7. Device used for illuminating the interior of vehicles (1) in accordance with any of the aforementioned claims that is **characterized** because each light source (2) incorporates a diffuser (7).

8. Device used for illuminating the interior of vehicles (1) in accordance with any of the aforementioned claims that is **characterized** because the power, voltage and/or luminance of the diffused light (5) can be regulated.

9. Device used for illuminating the interior of vehicles (1) in accordance with any of the aforementioned claims that is **characterized** because the diffused light (5) is daylight with a wavelength between 380 and 760 nm.

10. Device used for illuminating the interior of vehicles (1) in accordance with any of the aforementioned claims that is **characterized** because the spectral composition of the diffused light (5) can be adjusted.

11. Device used for illuminating the interior of vehicles (1) in accordance with claim 10 that is **characterized** because the spectral composition of the diffused light (5) is regulated using at least one filter (9).

12. Device used for illuminating the interior of vehicles (1) in accordance with claims 10 and 11 that is **characterized** because the spectral composition of the diffused light (5) is regulated using at least one regulator (8).

13. Device used for illuminating the interior of vehicles (1) in accordance with claims 10 through 12 that is **characterized** because the proportion of short wavelength bands that make up the diffused light spectrum (5) are increased with respect to the rest of the bands.

14. Device used for illuminating the interior of vehicles (1) in accordance with claim 13 that is **characterized** because the short wavelength bands between 380 and 500 nm that make up the diffused light spectrum (5) are increased with respect to the rest of the bands.

15. Device used for illuminating the interior of vehicles (1) in accordance with claim 13 that is **characterized** because the short wavelength bands between 431 and 500 nm that make up the diffused light spectrum (5) are increased with respect to the rest of the bands.

16. Device used for illuminating the interior of vehicles (1) in accordance with claim 13 that is **characterized** because the short wavelength bands between 380 and 430 nm that make up the diffused light spectrum (5) are increased with respect to the rest of the bands.

17. Method used for illuminating the interior of vehicles (1) in order to improve the visual performance of the driver (4) of a vehicle under mesopic low visibility conditions that includes:
- installing at least one diffused light source (2) inside the vehicle (1) and outside the driver's (4) field of vision;
- provide the means for installing and supplying power to each light source;
- by means of the generation of said diffused light source (5) inside the vehicle (1), provoke a regulated miosis in the driver (4) of the vehicle.

18. Method used for illuminating the interior of vehicles (1) in accordance with claim 17 that is **characterized** because at least one light source (2) is located above the driver (4) of the vehicle, fastened to the ceiling by means of a rails system (6) which allows the light to be moved.

19. Method used for illuminating the interior of vehicles (1) in accordance with claims 17 and 18 that is **characterized** because each light source (2) that is selected between incandescent, fluorescent and LED for fibre optics type lamps can be regulated using a regulator (8).

20. Method used for illuminating the interior of vehicles (1) in accordance with claims 17 through 19 that is **characterized** because the spectral composition of the diffused light (5) can be regulated using one or more filters (9).

21. Method used for illuminating the interior of vehicles (1) in accordance with claim 20 that is **characterized** because the proportion of short wavelength bands between 380 and 500 nm that make up the diffused light (5) spectrum are increased with respect to the rest of the bands.

22. Method used for illuminating the interior of vehicles (1) in accordance with claim 20 that is **characterized** because the proportion of short wavelength bands between 431 and 500 nm that make up the diffused light (5) spectrum are increased with respect to the rest of the bands.

23. Method used for illuminating the interior of vehicles (1) in accordance with claim 20 that is **characterized** because the proportion of short wavelength bands between 380 and 430 nm that make up the diffused light (5) spectrum are increased with respect to the rest of the bands.
